# EUROPEAN PATENT APPLICATION

(11) **EP 2 006 781 A1**
(43) Date of publication of application: **24.12.2008**
(21) Application number: 07252529.8
(22) Date of filing: 21.06.2007
(51) Int. Cl.: G06F 17/30

(54) **Method, apparatus and system for indexing and searching DNS zone records**

(71) Applicant: Telnic Limited, London SW1E 6PL (GB)
(72) Inventor: Mahdavi, Khashayar, 1204 Geneva (CH)
(74) Representative: Brinck, David John Borchardt

(57) **Abstract**

There is described a networked computer system comprising a domain name system server storing zone datafiles, each zone datafile storing records associated with a corresponding zone of the domain name system name space. According to the invention, at least one zone datafile stores search terms, and a search index generator queries the domain name system server to retrieve search terms from the at least one zone datafile and utilises said retrieved search terms in the generation of a search index. In an embodiment, the zone datafile also includes pointers to other regions of the domain name space, which may or may not be in the same zone, in which search terms may be found.

## Description

This invention relates to a search system facilitating the retrieval of information from files stored in a computer network. In particular, the invention concerns a system in which the network is partitioned into zones, and data associated with each zone is stored as a zone datafile in one or more domain name system (DNS) servers. As such, it will be recognised that this invention is applicable to the Internet.

In order to allow users of the Internet to find desired information from among the huge volume of information available on the Internet, search indices are used which index details of many web pages together with links to those web pages. The systems that collate and generate the indices, and provide responses to queries, are commonly known as search engines. In some search engines, a search index is presented as a hierarchical arrangement of categories through which the user navigates to identify a desired web site; in other search engines, the user inputs search terms into the search engine which then queries a search index using the input search terms to retrieve information about, and links to, web pages associated with those search terms; and many search engines allow searching both by category and by search terms submitted directly to the search engine.

Where applied to information relating to web pages, there are two general mechanisms for generating the search indices. In the first mechanism, a software agent often referred to as a "web crawler" or "spider" looks through web pages and generates indexing information for the web pages on the basis of the information contained therein. If a web page contains a link to another web page, then the software agent looks through and generates indexing information for that web page as well. This first mechanism requires access to the web server storing the web pages. In the second mechanism, indexing information for a web page is sent directly to the generator of the search index. The second mechanism allows an owner of a domain to have some control over the manner in which that domain is indexed, but also requires the owner of the domain to send the indexing information directly to each search index provider. However, if the domain owner does not send the indexing information to a search index generator, then there is no way that that search index generator can access the indexing information and therefore that search index generator has to employ the 'crawler' approach.

An object of the present invention is to provide a mechanism by which an owner of a domain can publish indexing information associated with that domain. Such information may include information about the owner of the domain, for example contact information.

Another object of the invention is to provide a mechanism by which a search index provider can retrieve indexing information about a domain published by the owner of the domain, and can use the retrieved indexing information in the construction or updating of a search index.

According to an aspect of the invention, indexing information for a domain is stored in the corresponding zone datafile. A search index provider is then able to query the zone data published for the domain to retrieve the indexing information. In this way, the invention provides an independent mechanism for publishing indexing information which does not rely upon the use of a web server, or sending indexing information directly to the search engine.

In an embodiment of the invention, the search index is used to facilitate searching through information associated with a sponsored Top Level Domain (sTLD). In this embodiment, there are three sets of devices involved in the system:
- a sponsoring organisation (SO) system which provides a search system enabling searching of the search index for the sTLD;
- a name service provider (NSP) server which creates and publishes search terms at the behest of the domain owner; and
- client devices which store code enabling a domain owner to update the search terms stored by the NSP.

An embodiment of the present invention will now be described in detail with reference to the attached Figures in which:
Figure 1 schematically shows the main components of a communication system according to the present invention;
Figure 2 schematically shows the main components of a user computer forming part of the communication system illustrated in Figure 1;
Figure 3 schematically shows the contents of a client program stored on the user computer illustrated in Figure 2;
Figure 4 schematically shows the main components of a name service provider server which is also associated with a registrar service and forms part of the communication system illustrated in Figure 1;
Figure 5 schematically shows the main components of a server associated with a sponsoring organisation, the server forming part of the communication system illustrated in Figure 1;
Figures 6A and 6B show a flow chart schematically illustrating the main steps involved in registering a domain with the sponsoring organisation; and
Figure 7 shows a flow chart schematically illustrating the main steps involved in maintaining a search index.

### SYSTEM OVERVIEW

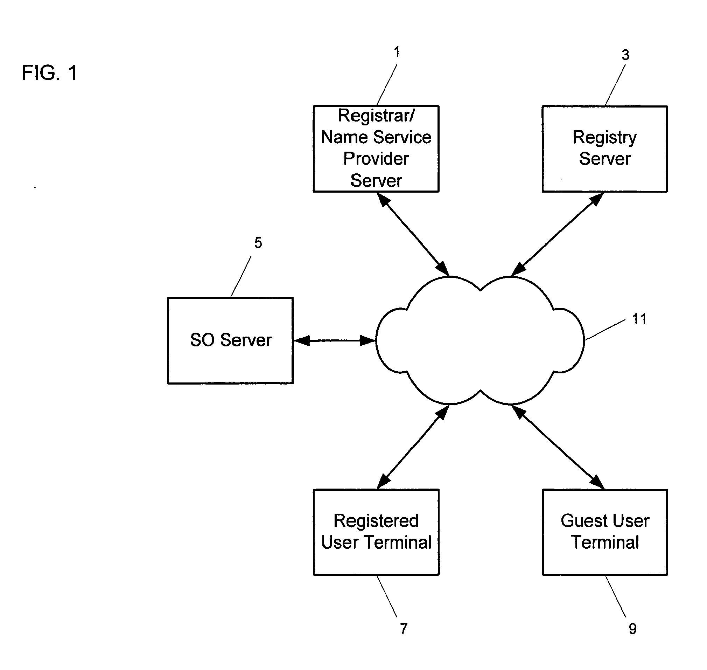

As schematically shown in Figure 1, the network communication system of the present invention involves a Registrar/Name Service Provider server 1 (hereafter referred to as the NSP server 1), a registry server 3, a sponsoring organisation server 5 (hereafter called the SO server 5), registered user terminals 7 (only one of which is shown in Figure 1 for ease of illustration) and guest user terminals 9 (only one of which is shown in Figure 1 for ease of illustration) all interconnected via the Internet 11.

The registry 3 is a conventional DNS registry which maintains a top-level domain. In this embodiment, the registry 3 maintains a sponsored top level domain, in particular the .Tel top-level domain. The registry 3 delegates responsibility for the maintenance of various zones associated with the .Tel domain to respective name service provider servers, of which the NSP server 1 is one.

In this embodiment, the NSP server 1 combines both name service provider functionality and registrar functionality, although these two functionalities are in fact logically separable. The registrar functionality provides an interface between a client and the registry 3 enabling the client to register a domain. The name service provider functionality maintains zone data associated with the registered domain. For the .Tel domain, the zone data stored by the NSP server 1 for a registered .Tel domain includes contact information identifying various electronic communication identifiers associated with the owner of the .Tel domain.

The role of the sponsoring organisation is to manage the registry for the sponsored top-level domain and to further the interests for the users of that sponsored top-level domain, which are sometimes referred to collectively as the Sponsored TLD Community. The sponsoring organisation formulates policy, provides a forum for user discussion, and provides services to users to further the use and utility of their domains. The sponsoring organisation maintains the SO server 5 to further these aims, and so to support the community members.

The registered user terminals 7 and the guest user terminals 9 may be conventional personal computers (PCs), workstations, mobile telephones and the like. The common feature of these devices is that they have a network connection allowing Internet access. For ease of explanation, this embodiment will discuss an exemplary registered user terminal 7 and an exemplary guest user terminal 9 which are both PCs. The registered user terminal 7 and the guest user terminal 9 both store a novel client program for use with the present invention.

In this embodiment, the owner of a domain of the sTLD is able to specify search terms which are stored by the NSP server 1 in the zone datafile for that domain. The SO server 5 supports a search facility which, in response to a user of a remote terminal inputting search terms, provides a list of domains of the sTLD which may be of interest. This search facility uses a search index which is compiled by 'crawling' through the zone datafiles for the domains registered in this sTLD to retrieve the search terms specified by the owners of those domains.

By allowing a domain owner to store search terms in the zone datafile for the domain, any search engine employing this technique can access those search terms to update a search index.

### NOVEL SYSTEM COMPONENTS

The main novel components of the network communication system will now be described in more detail.

### The Registered User Terminals

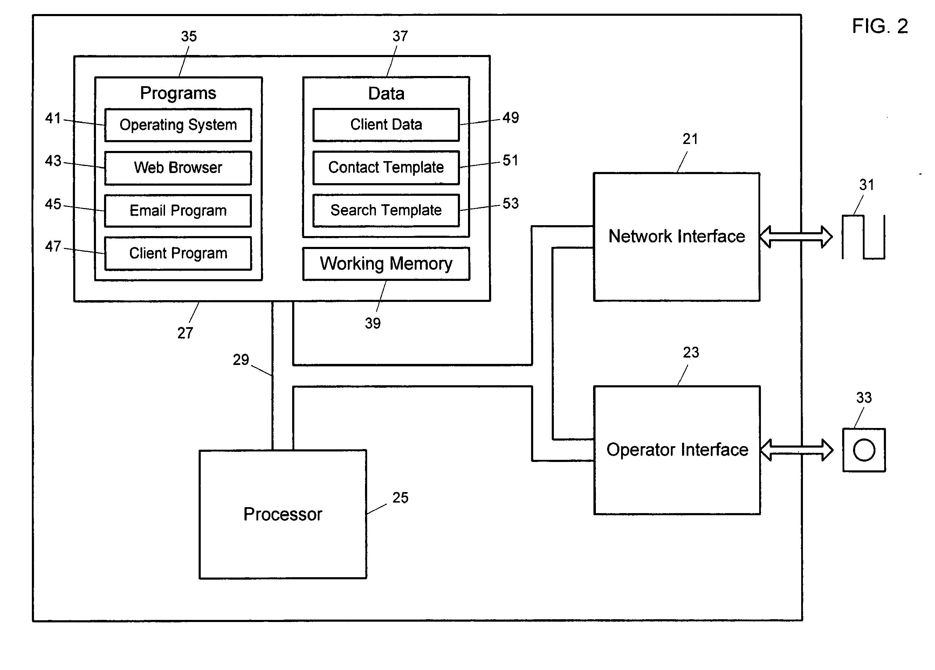

In this embodiment, the main components of a registered user terminal 7 can be schematically represented by Figure 2. As schematically shown, a network interface 21, an operator interface 23, a processor 25 and memory 27 are interconnected by a bus system 29. It will be appreciated that there may be other components present, and also that each of the illustrated components could in practice be implemented by more than one device.

The network interface 21 allows communication of signals 31 between the user terminal 7 and other devices connected to the Internet. In this way, data and/or instructions can be received by the user terminal 7 from a remote device, and the user terminal 7 can send data and/or instructions to a remote device.

The operator interface 23 allows communication with a user, so that the user can input data and/or instructions, and receive data. As such, the operator interface 23 includes human interface devices by which the user can enter data and instructions (such as a keyboard and a mouse device), and a display. In this embodiment, the operator interface 23 further includes a CD-ROM reader/writer which allows the user terminal 7 to input data and instructions stored on a CD-ROM 33.

For ease of explanation, the memory 27 is schematically shown having three regions: a programs region 35, a data region 37 and working memory 39. It will be appreciated that in practice programs and data need not be stored in the memory 27 in such regions. It will also be appreciated that in practice the memory 27 is likely to be constituted by several different memory devices, each having different properties such as access times.

The programs memory region 35 stores the programs used by the user terminal 7. In this embodiment, these programs include an operating system 41 which controls the operation of the user terminal, a web browser program 43 which allows the user terminal to retrieve data from a remote web server, an email program 45 which allows email communication with a remote network apparatus, and for the registered user terminal a client program 47 which is used for the purposes of the present invention.

The data memory region 37 stores data which is used by the programs. Within a registered user terminal, the data memory region 37 includes client data 49 storing information about the account of the user with the NSP responsible for provisioning the user's domain (and any account this user maintains with the sponsoring organisation), a contact template 51 storing network addresses associated with the user, and a search template 53 storing a list of search terms for a domain associated with the user.

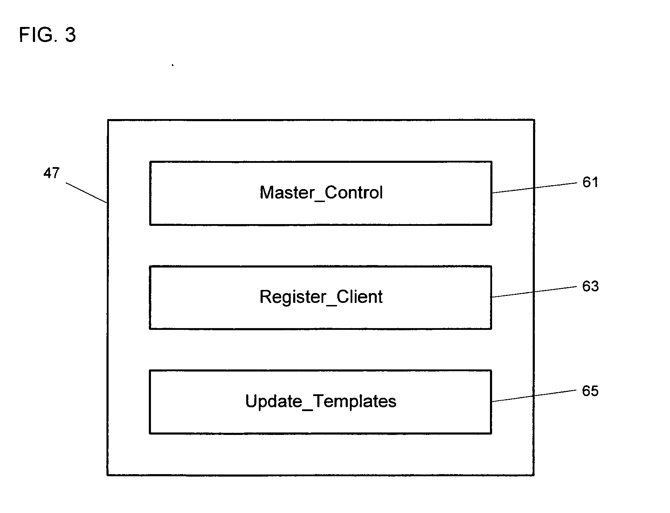

The client program 47 may be downloaded as a signal 31 or read from a computer-readable device such as the CD-ROM 33. Figure 3 shows the main routines of the client program 47. As shown, the client program 47 includes:
- a Master_Control routine 61;
- a Register_Client sub-routine 63 which is executed when the user registers as a client of a name service provider; and
- an Update_Templates sub-routine 65 which is executed when the user instructs the NSP server 1 to provision and publish new contact information and/or search terms.

### The NSP Server

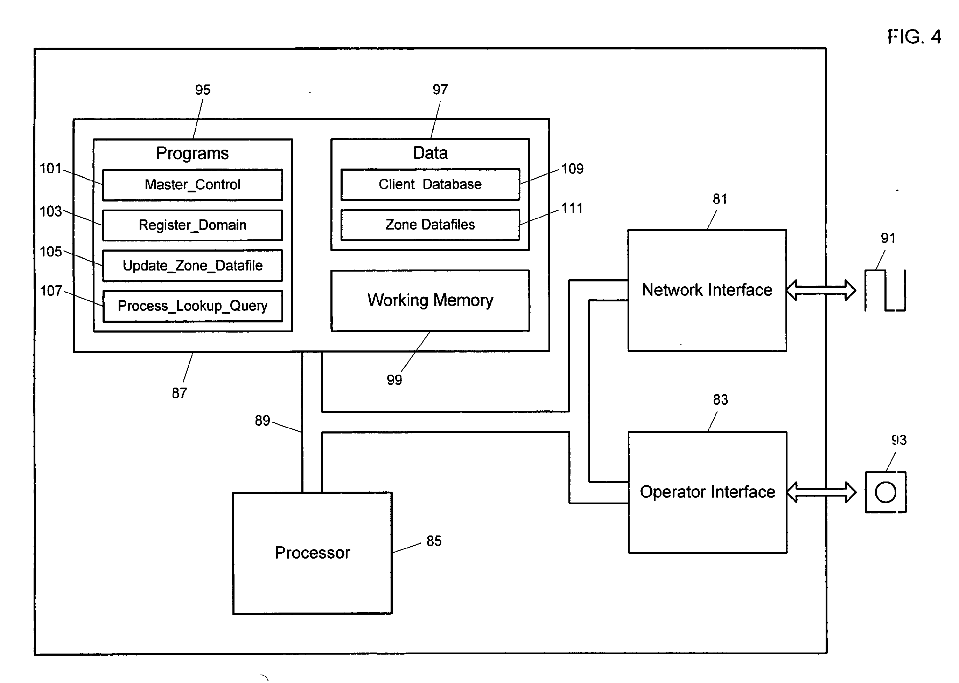

As schematically shown in Figure 4, the NSP server 1 has a network interface 81, an operator interface 83, a processor 85 and memory 87 interconnected by a bus system 89. It will be appreciated that there may be other components present, and also that each of the illustrated components could in practice be implemented by more than one device.

The network interface 81 allows communication of signals 91 between the NSP server 1 and other devices connected to the Internet. In this way, data and/or instructions can be received by the NSP server 1 from a remote networked device, and the NSP server 1 can send data and/or instructions to a remote networked device.

The operator interface 83 allows an operator to input data and/or instructions, and to view or otherwise export data. As such, the operator interface 83 includes human interface devices by which the user can enter data and instructions (such as a keyboard and a mouse device), and a display. In this embodiment, the operator interface 83 further includes a CD-ROM reader/writer which allows the NSP server 1 to input data and instructions stored on a CD-ROM 93.

For ease of explanation, the memory 87 is schematically shown having three regions: a programs region 95, a data region 97 and working memory 99. It will be appreciated that in practice programs and data need not be stored in the memory 87 in such regions. It will also be appreciated that in practice the memory 87 is likely to be constituted by several different memory devices, each having different properties such as access times.

The programs memory region 95 stores routines which are used by the NSP server 1 during operation. In particular, the routines stored in the programs memory region 95 include:
- a Master_Control routine 101 which controls the operation of the NSP server 1;
- a Register_Domain sub-routine 103 which is invoked when setting up a new domain;
- an Update_Zone_Datafile 105 which is invoked when a domain owner registers new search terms or contact data to be stored in the zone datafile;
- a Process_Lookup_Query 107 which is invoked when a request for data stored in a zone datafile is received.

The data memory region 97 stores a client database 109 storing username, domain name and password information for every client. The data memory region 97 also stores the zone datafiles 111 for the registered domains. The format of these zone datafiles will be discussed in more detail hereinafter.

### The SO Server

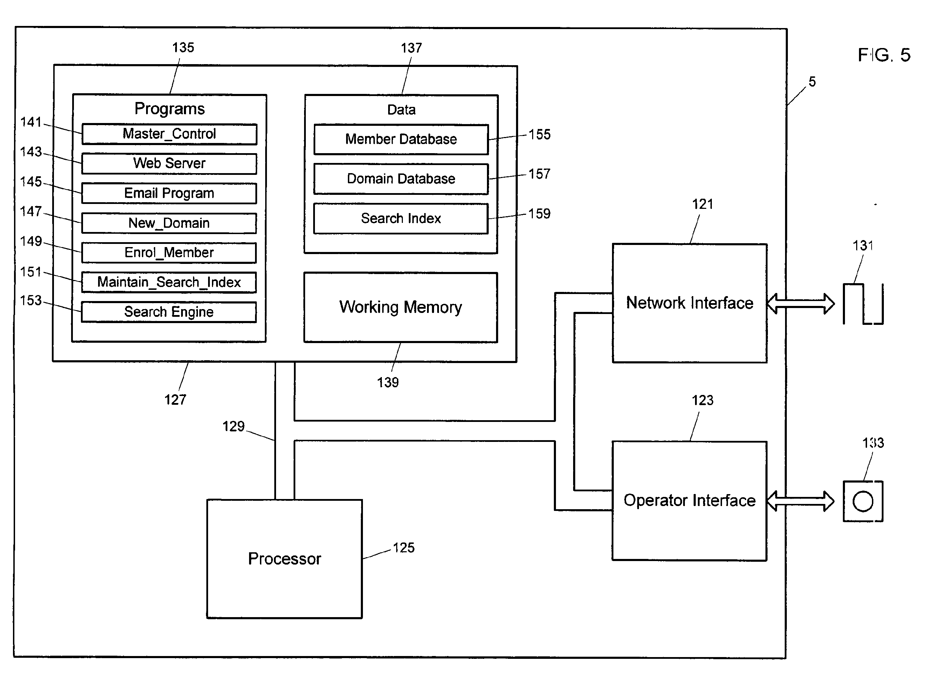

As shown in Figure 5, the SO server 5 has a network interface 121, an operator interface 123, a processor 125 and memory 127 interconnected by a bus system 129. It will be appreciated that there may be other components present, and also that each of the illustrated components could in practice be implemented by more than one device.

The network interface 121 allows communication of signals 131 between the SO server 5 and other devices connected to the Internet. In this way, data and/or instructions can be received by the SO server 1 from a remote networked device, and the SO server 5 can send data and/or instructions to a remote networked device.

The operator interface 123 allows an operator to input data and/or instructions, and to view or otherwise export data. As such, the operator interface 123 includes human interface devices by which the user can enter data and instructions (such as a keyboard and a mouse device), and a display. In this embodiment, the operator interface 123 further includes a CD-ROM reader/writer which allows the SO server 5 to input data and instructions stored on a CD-ROM 133.

For ease of explanation, the memory 127 is schematically shown having three regions: a programs region 135, a data region 137 and working memory 139. It will be appreciated that in practice programs and data need not be stored in the memory 127 in such regions. It will also be appreciated that in practice the memory 127 is likely to be constituted by several different memory devices, each having different properties such as access times.

The programs memory region 135 stores routines which are used by the SO server 5 during operation. In particular, the routines stored in the programs memory region 135 include:
- a Master_Control routine 141 which controls the operation of the SO server 1;
- a web server 143 which provides information to a web browser program of a remote networked computer in a conventional manner; and
- an email program 145 which sends electronic mail to, and receives electronic mail from, a remote networked computer in a conventional manner;
- a New_Domain sub-routine 147 which is invoked when the SO server 5 is advised of the registration of a new .Tel domain by the registry;
- an Enrol_Member sub-routine 149 which is invoked to enrol a new member of the sTLD community;
- a Maintain_Search_Index sub-routine 151 which is invoked to maintain an index of search terms; and
- a search engine 153 which is invoked to query the search index using search terms provided via a web page of the web server.

The data memory 137 stores data including a member database 155 which stores details of all the enrolled members of the sTLD community, a domain database 157 that holds details of all domains registered in the .Tel sTLD, and a search index 159 which stores the index of search terms. In this embodiment there are four types of member of the sTLD community, namely a temporary member, a full member, a declined member and a guest member. Temporary member status is assigned to a registrant of a new .Tel domain (where the registrant is not recognised as an existing member) prior to that registrant being invited to enrol as a member with the sponsoring organisation. When a new registrant of a .Tel domain who is already at least a guest member associates that registered domain with his/her current account with the sponsoring organisation, the registrant becomes a full member. Enrolment with the sponsoring organisation is not, however, obligatory and if a new registrant of a .Tel domain declines to enrol with the sponsoring organisation then the new registrant is termed a declined member. Finally, guest member status is assigned to parties who do not own a .Tel domain but who wish to use the services provided by the sponsoring organisation and to engage with others in the sTLD community.

### OPERATIONAL PROCEDURES

The manner in which the components of the network communication system interact with each other will now be described for the main operations performed by the network communication system. For ease of explanation, the description will consider the exemplary scenario where Alice registers the domain name Example.tel.

### New Domain Registration

In order to register the Example.tel domain name, Alice contacts a registrar and indicates the desired .Tel domain name. The registrar sends an application to the registry 3 for registration of the Example.tel domain name together with details of corresponding NSP servers, of which the NSP server 1 is an example. As discussed previously, in this embodiment the registrar also manages the NSP server 1. The registry 3 checks that Example.tel has not already been registered, and if not registers Example.tel and logs that signals requesting DNS information and identifying that domain name should be directed to the NSP server 1. If Example.tel had already been registered by someone else (or was otherwise unavailable), then the registry 3 would have advised the registrar accordingly, and the registrar would have advised Alice to request an alternative .Tel domain name.

In this embodiment, the client program 47 on Alice's computer utilises the Register_Client sub-routine 63 to exchange credentials with the NSP server 1, and stores the exchanged credentials. In this embodiment, these credentials allow the client program 47 to interact directly with the NSP server 1. The Register_Client sub-routine 63 also includes a call to the Update_Templates sub-routine 65, which prompts Alice to enter items of contact information, and then stores the entered items of contact information in the contact template 51. Each item of contact information specifies an electronic communication identifier for Alice together with the appropriate communications protocol. For example, Alice may enter items of contact information for (1) contacting Alice by telephoning her work telephone, (2) contacting Alice by telephoning her cellular phone, (3) contacting Alice by sending an SMS message to her cellular phone, (4) sending a facsimile message to her work facsimile machine, and (5) sending an email to her email address.

In addition, in this embodiment, the Update_Templates sub-routine 65 also prompts Alice to enter keywords in various different categories to enable Example.tel to be found in searching operations, and stores the entered keywords in the search template 53. For example, in this embodiment Alice may enter keywords in the following categories:
- nickname
- first name
- family name
- country
- location
- state
- street
- business
- organisational unit
- title
- arbitrary keywords
- business category
- business postal address
- post office box
- postal code
- physical delivery address
- registered address
- initials
- generational qualifier (jr, III, etc.)
- house identifier

Each of these categories may have defined input fields, for example business postal address may have the input fields:
- suite/housename
- Address Line 1
- Address Line 2
- Address Line 3
- City
- State
- Postcode
- Country

For exemplary purposes, in this embodiment Alice enters her first name ("Alice"), her business ("Telnic Limited") and her address ("8, Wilfred Street, London, SW1, UK")

After the contact information and search terms have been entered, the Update_Templates sub-routine 65 sends the entered contact information and the entered search terms to the NSP server 1 for incorporation in the zone datafile for Example.tel. In this embodiment, after checking the credentials of the client program 47 the NSP server 1 incorporates the items of contact information as NAPTR records within the zone datafile associated with Example.tel and incorporates the search terms in TXT records within the zone datafile associated with Example.tel. As TXT records may be used for other uses, the search terms are entered in the following format:
IN TXT <keyword identifier> <keyword category> <keyword value>
where <keyword identifier> represents a fixed code sequence which identifies the following data to be related to search terms, <keyword category> identifies the category of keyword, and <keyword value> indicates a sequence of one or more keyword fields associated with the category.

An example of the code employed in the zone datafile is as follows:
$TTL 86400
$ORIGIN example.tel.
@ IN SOA bind.nsp-google.dns.tel sysadmin.nsp-google.tel (
   1139418938 ; serial
   3h ; refresh
   1h ; retry
   1w ; expire
   1h) ; minimum
   IN NS bind.nsp-google.dns.tel.
@ IN A 172.16.30.13
; End user content follows
60 IN NAPTR 100 50 "u" "E2U+voice:tel+x-work" "!^.*!tel:+441234567890!"
60 IN NAPTR 100 51 "u" "E2U+voice:tel+x-mobile" "!^.*!tel:+447979797979!"
60 IN NAPTR 100 51 "u" "E2U+sms:tel" "!^.*!tel:+447979797979!"
60 IN NAPTR 100 52 "u" "E2U+fax:tel" "!^.*$!tel:+441234567891!!"
60 IN NAPTR 100 53 "u" "E2U+email:mailto"
   "!^.*$!mailto:alice@wonderland.co.uk!"
IN TXT "unrelated text record"
; End user keywords follow
IN TXT "2356765" "first-name" "Alice"
IN TXT "2356765" "business" "Telnic Limited"
IN TXT "2356765" "business-address" "8" "Wilfred Street" "" "" "London" ""
   "SW1" "UK"

In this embodiment, the registry automatically provides information for Example.tel, including a method for contacting Alice, to the sponsoring organisation. In this way, the sponsoring organisation can keep a record of all the registered domains and their owners.

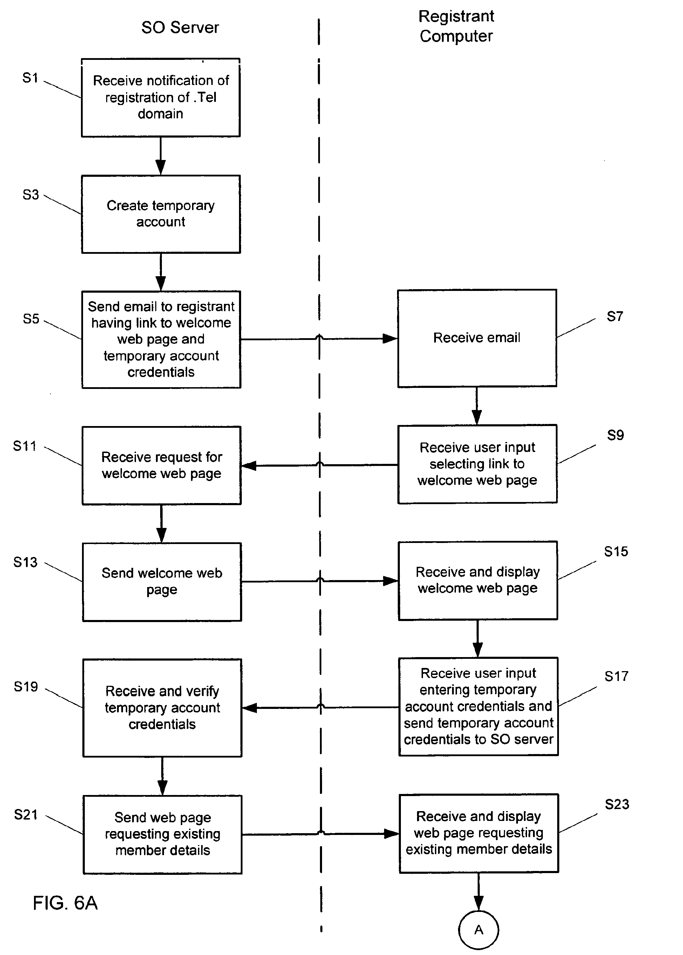

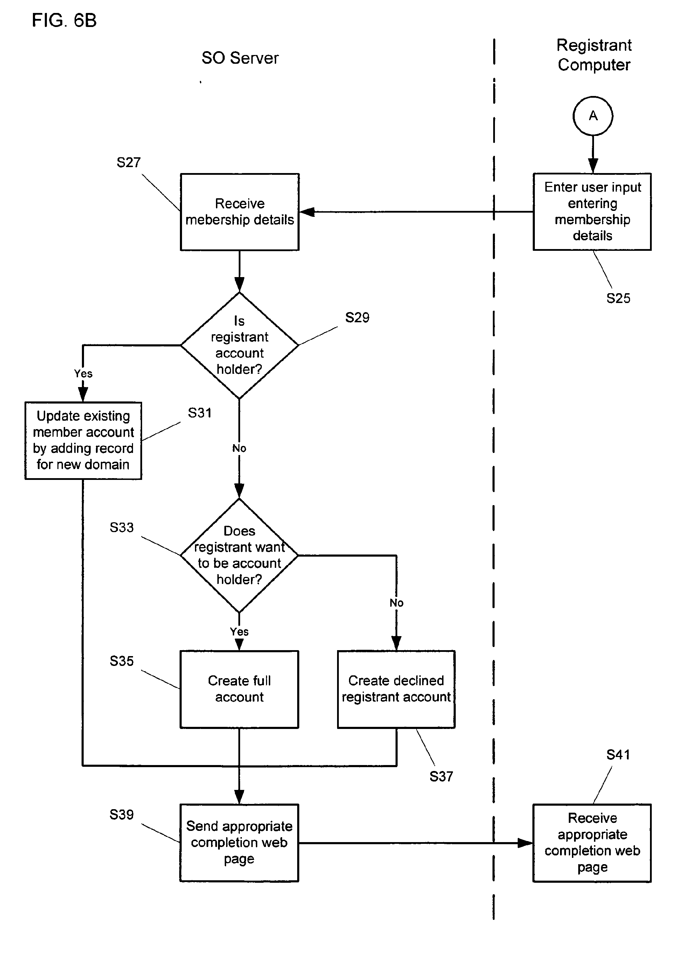

Turning now to Figures 6A and 6B, following receipt, at S1, of the notification of the registration of Example.tel from the NSP server 1, the SO server 5 initiates the New_Domain sub-routine 147 which creates, at S3, a temporary client account for Alice and enters the new domain in the domain database 157. In particular, the SO server 5 assigns a unique username to Alice and a temporary username and password and stores them in the online credentials, and generates a record for Example.tel which at this stage only includes the domain name and the domain owner's contact information provided by the registry.

The SO server 5 then sends, at S5, a welcome email to Alice. This welcome email includes a URI incorporating both the web address for a welcome web page and the username for Alice. The welcome email also includes the credentials for the temporary account. The SO server 5 then waits until the registrant of the new .Tel domain accesses the welcome web page.

Following receipt and opening, at S7, of the welcome email, and selection, at S9, of the URI for the welcome web page by Alice, Alice's computer sends a request for the welcome web page including the URI to the SO server 5. Following receipt, at S11, of the request, the web server 143 of the SO server 5 sends, at S13, the welcome web page to the Alice's computer. This welcome web page includes a data entry field for entering the temporary username and password sent to Alice in the welcome email.

After receiving and displaying, at S 15, the welcome web page, Alice's computer receives, at S17, an input from Alice entering the temporary username and password in the appropriate data fields. Alice's computer then sends these credentials to the SO server 5. Following receipt of the credentials, the SO server 5 verifies that the received credentials match those for the temporary account associated with the URI of this web page, and then sends, at S21, a web page asking Alice how the SO should treat this domain registration. This web page includes a data field for indicating whether or not Alice already has an account with the sponsoring organisation, and also a data field for indicating whether or not Alice wants an account with the sponsoring organisation.

After receiving and displaying, at S23, the web page requesting Alice's choices and any existing membership details, Alice's computer receives, at S25, inputs from Alice specifying the choices and if appropriate existing membership details. Alice's computer then sends the entered information to the SO server 5.

Following receipt, at S27, of the information including any existing membership details the SO server 5 checks, at S29 if Alice is already an account holder. If Alice is already an account holder, then the SO server 5 updates, at S31, Alice's existing account by adding information for Example.tel. If Alice is not already an account holder, the sponsoring organisation checks, at S33, if Alice wants to be an account holder.

If Alice wishes to be an account holder, the SO server 5 converts, at S35, the temporary account into a full account. This involves completing the online credentials for the account holder and sending these to the registrant computer for subsequent use by the client program. If Alice does not wish to be an account holder, the SO server 5 converts, at S37, the temporary account to a declined account.

Finally, the SO server 5 sends, at S39, an appropriate enrolment complete web page to Alice's computer, which receives and displays, at S41, the completion web page.

Following registration of the domain name Example.tel, Alice can change the contact information or search terms by initiating the Update_Templates sub-routine 65. This prompts Alice to enter new contact information in the contact template 51 and/or search terms in the search template 53, and then sends the updated contact information and/or search terms to the NSP server 1 for incorporation in the zone datafile of Example.tel. On receipt of the updated contact information and/or search terms, the NSP server 1 initiates the Update_Zone_Datafile sub-routine 105 to update the zone datafile for Example.tel accordingly.

### Search Index Maintenance

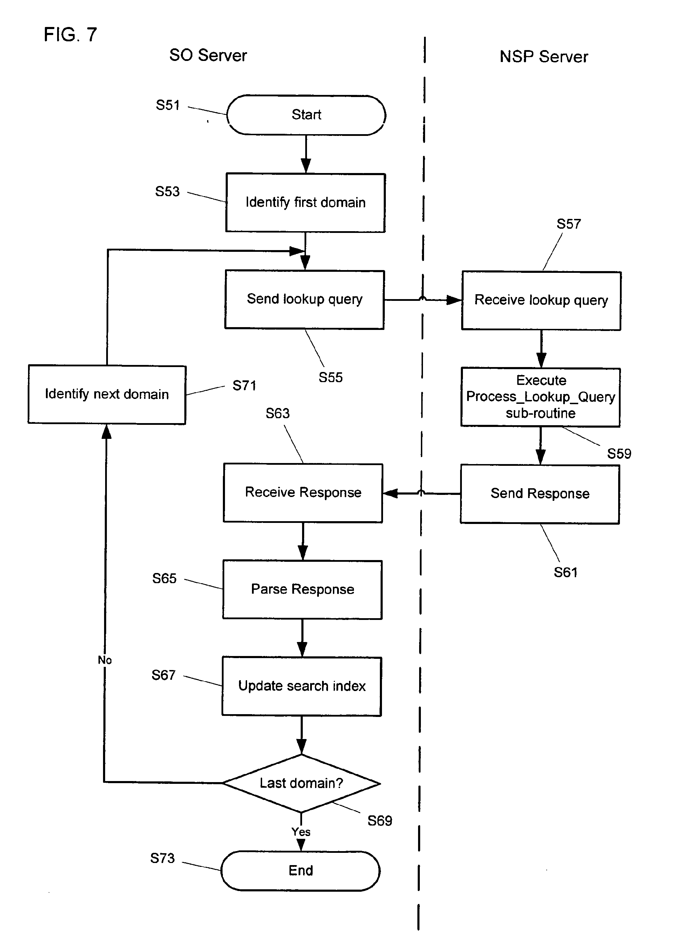

As mentioned above, in this embodiment the SO server 5 maintains a search index which is used when processing search queries. In particular, in this embodiment the SO server 5 periodically executes the Maintain_Search_Index sub-routine 151 which searches through the zone datafiles for all the registered .Tel domains. This will now be described in more detail with reference to Figure 7.

As shown, after initiation, at S1, of the Maintain_Search_Index sub-routine 151, the SO server 5 identifies, at S53, the first registered domain. The SO server 5 then sends, at S55, a lookup query to the NSP server 1 requesting all TXT records for the identified domain. In particular, in this embodiment the lookup query is generated using a tool called 'Dig' which comes as standard with many Linux distributions. For the domain Example.tel, the Dig query is as follows:
dig +all example.tel TXT

After receiving, at S57, the lookup query, the NSP server 1 executes the Process_Lookup_Query sub-routine 107 which extracts the TXT records in the zone datafile for the identified domain and generates a response conveying the information in the extracted TXT records. The NSP server 1 then sends, at S61, the response to the SO server 5. In this embodiment, for the domain Example.tel the response conveys the following information:
; «» DIG 9.3.4 «» +all example.tel TXT
;; global options: printcmd
;; Got answer:
;; -»HEADER«- opcode: QUERY, status: NOERROR, id: 41331
;; flags: qr rd ra; QUERY: 1, ANSWER: 4, AUTHORITY: 3, ADDITIONAL: 0
;; QUESTION SECTION:
; example.tel. IN TXT
;; ANSWER SECTION:
example .tel. 10800 IN TXT "2356765" "business-address" "8"
   "Wilfred Street" "" "" "London" "" "SW1" "UK"
example.tel. 10800 IN TXT "unrelated text record"
example.tel. 10800 IN TXT "2356765" "business" "Telnic Limited"
example.tel. 10800 IN TXT "2356765" "first-name" "Alice"
;; AUTHORITY SECTION
example.tel. 10800 IN NS ns20000.dns.tel.
example.tel. 10800 IN NS ns30000.dns.tel.
example.tel 10800 IN NS ns10000.dns.tel.
;; Query time: 1 msec
;; SERVER: 127.0.0.1#53(127.0.0.1)
;; WHEN: Fri Jun 815:22:54 2007
;; MSG SIZE rcvd: 285

After receiving, at S63, the response from the NSP server 1, the SO server 5 parses, at S65, the received code. This parsing identifies the TXT records associated with keywords as these have the <keyword identifier> code (i.e. in the example above 2356765) as their first field value, and then formats the keyword categories and keyword values. The SO server 5 then updates, at S67, the search index accordingly. As those skilled in the art will appreciate, the search index links various keywords with corresponding domains.

The SO server 5 then checks, at S69, if the current domain is the last domain. If the current domain is not the last domain, then the SO server 5 identifies, at S71, the next domain and repeats the sub-process of sending a lookup query and processing the response. If the current domain is the last domain, then the Maintain_Search_Index sub-routine 151 ends at S73.

### Search Operation

The SO server 5 allows remote computer users to search through registered .Tel domains using a web browser. The user of the remote computer enters one or more keywords in a data entry box provided on a web page, the search engine 153 looks up the entered search terms in the search index 159 to generate a corresponding list of .Tel domains, and the web server 143 sends the list of Tel domains as a web page to the remote computer. This list of domain names would typically be ranked in order of relevance. On selecting one of the .Tel domains, a lookup query is sent to the NSP server 1 which returns the contact information stored in the zone datafile for the selected domain.

For example, in this embodiment the user of the remote computer may want to find people associated with Telnic Limited. The user therefore enters Telnic as a search term into the search engine, and the SO server 5 sends a list of .Tel domains including Example.tel. On selecting Example.tel, the remote computer sends a query for contacts in this domain. The contact information stored in NAPTR records of the zone datafile for Example.tel are returned to the remote computer.

### MODIFICATIONS AND FURTHER EMBODIMENTS

In the main embodiment discussed above with reference to the attached figures, for each domain there is a single collection of search terms stored in the zone datafile. It will, however, be appreciated that many domains have sub-domains and it may be desired to store separate indexing information for different sub-domains. The zone data for these sub-domains could be stored in the same zone datafile as the zone data for the parent domain, or alternatively could be stored in a separate zone datafile.

One way in which indexing information for sub-domains could be retrieved for inclusion in the search index is to include non-terminal NAPTR records pointing to sub-domains in the part of the zone datafile associated with the parent domain. A non-terminal NAPTR record is a NAPTR record that does not itself hold contact information, but instead "points to" a target domain name where further NAPTR records may be found. The non-terminal NAPTR may point to a sub-domain whose zone data is stored in the same zone datafile as the parent domain (i.e. the sub-domain is within the same zone of the domain name space as the parent domain), or a sub-domain whose zone data is stored in a different zone datafile to the zone data for the parent domain (i.e. the sub-domain is in a different zone of the domain name space to the parent domain). In this way, the non-terminal NAPTRs build a web of keywords and the domains which hold them. For example, Alice is able to instruct the NSP server 1 to indicate not only the keywords held in the main example.tel domain, but also that there may be further keywords and contacts associated with other domains. During the processing of the Maintain_Search_Index sub-routine 151, immediately after S67, the SO server could send another look-up query to NSP server 1 asking for all NAPTR records in the queried domain. If the returned NAPTR records include non-terminal NAPTR records, then for each such record the SO server generates and sends further TXT and NAPTR look-up queries, and the process continues in an iterative fashion until all the TXT records linked to the originally queried domain through non-terminal NAPTR records have been retrieved.

It will be appreciated that the non-terminal NAPTR records need not point to sub-domains of the parent domain and could refer to a target domain which is completely outside the domain holding the referring non-terminal NAPTR records. Thus, the zone data for Example.tel could include a non-terminal NAPTR pointing to the domain Example.com instead of a sub-domain of Example.tel.

In an embodiment, rules are incorporated within the Maintain_Search_Index sub-routine for dealing with non-terminal NAPTRS. For example, there may be a rule stating that all non-terminal NAPTRS pointing to a target domain which is not a sub-domain of the domain holding the non-terminal NAPTR should be ignored. Deciding whether or not the Maintain_Search_Index sub-routine considers each target domain is a policy issue, not a technical one.

In the main embodimant, the 'Dig' tool is used to query zone datafiles. It will be appreciated that this is not essential as there are many different ways in which the datagrams associated with the lookup queries could be generated and interpreted.

Although in the main embodiment the invention is applied to generate a search index for a web system in which contact information is retrieved from a NSP server 1, it could equally well be applied to more conventional Internet systems in which the zone datafile for a domain stores the network locations for servers storing retrievable information (e.g. web pages). In such an Internet system, the invention has the advantage that in order to generate the search index, the 'web crawler' software agent does not have to access the server storing the retrievable information.

When using the invention in such a conventional Internet system, it is necessary to know the domain names before search terms for those domain names may be retrieved. In one embodiment, a DNS registry is queried for domain names which are then used to construct and/or maintain the search index. However, in the general case this is very inefficient as the entity querying the registry has to guess which domains are registered, and so might have to make many queries with random names before detecting a domain name which had been registered. As an alternative to such a "brute force" approach, the registry could collate listing of all registered domain names and provide the listing to suitable search index generators. In an alternative embodiment, the DNS registry itself generates the search index by querying the zone datafiles for the domains registered by the registry, and the registry provides access to the search index for searching operations by search engines.

In the main embodiment, the registry system operates discretely from the sponsoring organisation. In other top level domains where there is no separate sponsoring organisation, the registry itself could embody both features.

In the main embodiment, the search terms are stored in TXT records in a zone datafile. In order to distinguish which TXT records are used to store search terms, a keyword identifier is incorporated into the TXT record. Such an arrangement has the significant advantage that no modification is required to the present underlying DNS standards. However, other ways of incorporating search terms into a zone datafile could be employed. For example, with a suitable change of the underlying DNS standards, a new type of record which specifically stores search terms could be used.

In the main embodiment, the user computers include a client program which is able to interact with the NSP server 1. Alternatively, the NSP server 1 could include a web server which allows the user computers to interact with the NSP server 1 using a conventional web browser.

European patent application no. 07252005.9, filed on 16 May 2007 and entitled "Communication Information Retrieval System and Communication System Using the Same", the whole contents of which are hereby incorporated by reference, discusses a system in which encrypted electronic communication identifiers may be stored in a zone datafile. The present invention may be utilised in conjunction with such a system.

Although a keyword search engine is used in the main embodiment, it will be appreciated that alternatively, or in addition, the search index could be used to implement a hierarchical category-based search.

As previously discussed, the registrar functionality and the name service provider functionality are logically separable. Accordingly, the registrar functionality and the name service provider functionality could be provided by separate servers.

In the described embodiment, contact information is stored in the zone data for a .Tel domain. It will be appreciated that the invention can also be implemented using zone data relating to other top level domains.

It will be appreciated by those skilled in the art that a zone datafile may be replicated over several domain name system servers. Typically, a primary nameserver (sometimes called a master nameserver) holds an authoritative zone datafile, and copies of the authoritative zone datafile are maintained by one or more secondary nameservers (sometimes called slave nameservers). Periodically, the secondary nameservers check whether the zone datafile in the primary nameserver has been modified, and if so replicates the modifications.

The embodiment described with reference to the drawings comprises computer apparatus and involves processes performed in the computer apparatus. The invention also extends to computer programs, particularly computer programs on or in a carrier, adapted for putting the invention into practice. The program may be in the form of source code, object code, a code intermediate to source code and object code such as in partially compiled form, or in any other form suitable for using in the implementation of the processes according to the invention.

The carrier may be any entity or device capable of carrying the program. For example, the carrier may comprise a storage medium, such as a ROM, for example a CD-ROM or a semiconductor ROM, or a magnetic recording medium, for example a floppy disc or a hard disc, or an optical recording medium. Further, the carrier may be a transmissible carrier such as an electronic or optical signal which may be conveyed via electrical or optical cable or by radio or other means.

The carrier may be an integrated circuit in which the program is embedded, the integrated circuit being adapted for performing, or for use in the performance of, the relevant processes.

Although in the described embodiment the invention is implemented by software, it will be appreciated that alternatively the invention could be implemented by hardware devices or a combination of hardware devices and software.

## Claims

1. A networked computer system comprising:
a domain name system server storing zone datafiles, each zone datafile storing records associated with a corresponding zone of the domain name system name space;
a search index generator operable to generate a search index,
wherein at least one zone datafile stores search terms, and
wherein the search index generator is operable to query the domain name system server to retrieve search terms from at least one zone datafile and to utilise said retrieved search terms in the generation of the search index.

2. A networked computer system according to claim 1, wherein the zone datafile stores the search terms in TXT records.

3. A networked computer system according to claim 2, wherein the search terms are stored in TXT records in conjunction with a keyword identifier.

4. A networked computer system according to claim 1, wherein the zone datafile stores the search terms in records used exclusively for storing search terms.

5. A networked computer system according to any preceding claim,
wherein at least one zone datafile stores a record identifying a region of the domain name system name space, and wherein the search index generator is operable to retrieve from said record data identifying said region of the domain name system space, and to generate a domain name system query for retrieving search terms associated with said region of the domain name system name space from the domain name system server storing the zone datafile associated with said region of the domain name system name space.

6. A networked computer system according to claim 5, wherein at least one zone datafile stores records for a domain and at least one sub-domain, and
wherein the records associated with the domain include a record identifying a sub-domain of said domain.

7. A networked computer system according to claim 5, wherein said record identifies a region of the domain name space whose zone datafile is stored on a different domain name system server to the domain name system server storing said record.

8. A networked computer system according to claim 7, wherein said region of the domain name space is a sub-domain of the domain corresponding to the zone datafile storing said record.

9. A networked computer system according to any of claims 5 to 8,
wherein said record identifying a region of the domain name system name space is a non-terminal NAPTR record.

10. A networked computer system according to any preceding claim, further comprising a plurality of servers, each server storing one or more content datafiles,
wherein each server is associated with a respective zone datafile, and
wherein at least one zone datafile stores search terms corresponding to one or more content datafiles stored in a server associated with that zone datafile.

11. A networked system according to claim 10, further comprising a domain name system registry, wherein the search generator is operable to query the domain name registry to retrieve a plurality of domain names.

12. A networked system according to any preceding claim, wherein the zone datafile corresponding to a zone of the domain name space is replicated over a plurality of domain name servers.

13. A domain name system server storing zone datafiles, each zone datafile storing records associated with a corresponding zone of the domain name system name space, wherein at least one zone datafile stores search terms associated with the corresponding zone which are retrievable by a remote search index generator.

14. A domain name system server according to claim 13, wherein the zone datafile stores the search terms in TXT records.

15. A domain name system server according to claim 14, wherein the search terms are stored in TXT records in conjunction with a keyword identifier.

16. A domain name system server according to claim 13, wherein the search terms are stored in records used exclusively for storing search terms.

17. A domain name system server according to any of claims 13 to 16,
wherein at least one zone datafile further stores a record identifying a region of the domain name system name space.

18. A domain name system server according to claim 17 , wherein at least one zone datafile stores records for a domain and one or more sub-domains of that domain, and wherein the records associated with the domain include a record identifying a sub-domain of the domain.

19. A domain name system server according to claim 17, wherein said record identifies a region of the domain name space whose zone datafile is stored on a remote domain name system server.

20. A domain name system server according to claim 19, wherein said region of the domain name space is a sub-domain of the domain corresponding to the zone datafile storing said record.

21. A domain name system server according to any of claims 17 to 20,
wherein said record identifying a region of the domain name space is a non-terminal NAPTR record.

22. A search index generator for a networked computer system, the search index generator comprising:
a query generator operable to generate a query for retrieving search terms from a zone datafile associated with a zone of the domain name system name space;
a network interface operable to output said query and to receive a response to said query, said response including one or more search terms; and
a search index maintainer operable to incorporate the received search terms in a search index.

23. A search index generator according to claim 22, wherein the query generator is operable to generate a query for retrieving TXT records from said zone datafile.

24. A search index generator according to claim 23, further comprising a parser operable to parse the response to said query to extract said one or more search terms.

25. A search index generator according to any of claims 22 to 24, wherein the query generator is operable to generate a query for retrieving domain name information from a zone datafile associated with a region of the domain name system name space, and to send a query for retrieving search terms from a zone datafile associated with the retrieved domain name information.

26. A search index generator according to claim 25, wherein the query generator is operable to query non-terminal NAPTR records stored in the zone datafile to recover said domain name information.

27. A method of generating search results in response to a search query, the method comprising:
for a plurality of domains, retrieving search terms from zone datafiles respectively corresponding to the plurality of domains, each zone data file being stored by a respective domain name system server;
generating a search index using the retrieved search terms, the search index associating each of the plurality of domains with one or more search terms; and
in response to a query received from a remote network device identifying at least one search term, generating search results using said search index and sending the generated search results to the remote network device.

28. A method according to claim 27, wherein search terms are retrieved by retrieving TXT records from said zone datafiles.

29. A method according to claim 27 or 28, further comprising retrieving the identities of other domains from records stored in the zone datafiles for said domain name space, and retrieving search terms from the zone datafiles associated with said identified domains.

30. A method according to claim 29, wherein said records identifying said other domains are non-terminal NAPTR records.

31. A method of publishing search terms associated with a domain of the domain name space, the method comprising transmitting search terms to the domain name system server storing the zone datafile associated with said domain of the domain name space.
